# EUROPEAN PATENT APPLICATION

(11) **EP 1 583 381 A1**
(43) Date of publication of application: **05.10.2005**
(21) Application number: 04290101.7
(22) Date of filing: 14.01.2004
(51) Int. Cl.: H04Q 7/32, H04M 1/725, G06F 9/445

(54) **Updating of the preferred roaming list (PRL) in a Subscriber Identity Module (SIM) or Removable User identity Module (RUIM)**

(71) Applicant: Axalto S.A., 92120 Montrouge (FR)
(72) Inventor: Cheng, Kenneth Axalto - A Schlumberger Company, 92542 Montrouge Cedex (FR); Lam, Tony Axalto - A Schlumberger Company, 92542 Montrouge Cedex (FR)

(57) **Abstract**

Method for updating a file in a data processing system comprising a first file (Efprl) storing data information able to be updated through a network, characterized in that said system comprises at least one second file (Efmr) having the same structure as the first file (Efprl), said second file (EFmr) storing data information updates received from the network, and in that when the first file (Efprl) have to be updated, said method comprises the step of renaming the second file (Efmr) by the name of the first file (Efprl).

In particular, the data processing system is a SIM card of a mobile phone and said files comprise preferred roaming list, (PRL).

## Description

### Field of the Invention

The invention deals with updating of data stored in a file included in a data processing system. The present invention relates generally to handling roaming lists in a wireless communication system, and more specifically to updating a preferred roaming list PRL (Preferred Roaming List). Generally, this list is stored in a SIM (Subscriber Identity Module) card or a RUIM (Removable User Identity Module)

A PRL is a list defined in the specifications [S0023] and [S0016] for CDMA (Code-Division Multiple Access). These two documents are incorporated by reference to the description. It allows the Operator to use the OTAPA/SP commands to update the over the air using a defined protocol [S0016]. The relevant files are described in the [S0023] specification.

### Prior Art

Generally, the PRL list is a list of information that resides in the memory of a smart card coupled to a mobile phone. This list is set by the network operator and stored in the SIM/RUIM card. It lists the frequency bands the phone can use in various parts of a country.

This list can be updated by the home network operator by means of data download over the air (OTA). A process used and defined in the above-identified standard is: Over-the-Air Service Provisioning (OTASP). This is a process of provisioning mobile station operational parameters over the air interface.

Products existing today which support the [S0016-0] or [S0016-A] (OTAPA/SP) functionality will have the possibility to update the files for Preferred Roaming List using the commands
- SSPR (System Selection for Preferred Roaming) Download Request
- and SSPR Configuration Request.
   Over-the-Air Parameter Administration (OTA/PA) is a network initiated OTASP process of provisioning mobile phone operational parameters over the air interface.
   Over-the-Air Service Provisioning (OTA/SP) is a process of provisioning mobile station operational parameters over the air interface.
   The mobile station can receive Preferred Roaming List parameters in one or more SSPR commands from the network.
   As the APDU buffer on a RUIM is today restricted to 255 bytes, a complete PRL update will be sent over many commands. So, a list PRL is stored in a temporary storage until reception of a "commit" command received from the server requesting the PRL list update. When the server sends a 'Commit APDU', all the data stored in said temporary storage is copied into the file EFₚᵣₗ file itself in a permanent memory. The process is very long due to limited resources in the smart card. The problem becomes worse as the size of the PRL increases.
   Today, the size of a PRL update is about 500 bytes. When the PRL is of a greater size, the processor of the card is engaged in an update process for a long period of time.
   This is unacceptable in a GSM context as it is stated that each command should take no longer than 2 seconds in order to allow 'authentication' during a session. Although it is not a restriction in CDMA (Code-Division Multiple Access), from a user point of view, an overly long wait is not desirable.

### The Invention

The aim of the invention is to reduce the time that is required to update a PRL list in a smart card.

According to the invention, said data processing system comprises a second file Efmr stored in permanent memory, this file Efmr having the same structure as the first file Efprl, said second file storing data information updates received from the network, and in that when the first file Efprl has to be updated by said second file Efmr, the second file Efmr is renamed by the name of the first file (Efprl).

In this way, using a file EFmr as temporary storage provides a way to get consistent timing for PRL update operations regardless of the size of the PRL list. This file EFmr is used to store each of the PRL update blocks. So, the step of updating the PRL list is largely reduced in time. In our example, this time is reduced to the time of modifying the file header.

It will be easier to understand the invention on reading the description below, given as an example and referring to the attached drawings.

In the drawings
- Figure 1 is a block diagram view of the architecture of a computer system on which the solution can be applied.
- Figure 2 is an example of an OTAPA/SP sequence for PRL Update. Card and ME actions.
- Figure 3 is a view of a part of a file storing a list of partners PRL;
- Figure 4 is a view of a part of a file storing a list of partners PRL, this file being updates and being stored in said permanent memory according to the invention.

### Detailed description of examples illustrating the invention

To simplify the description, the same elements illustrated in the drawings have the same references.

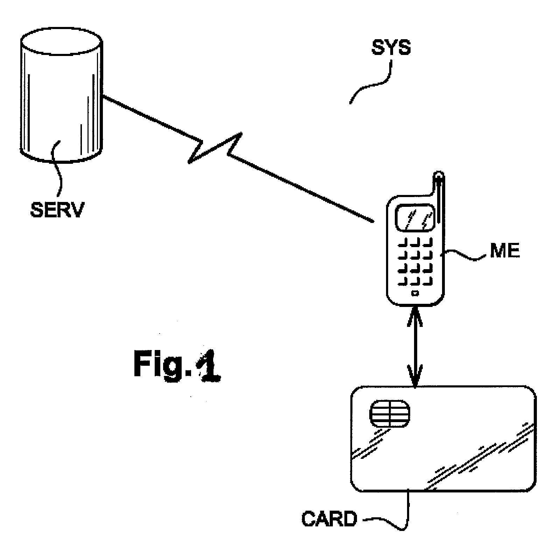

Figure 1 illustrates a system SYS including a mobile phone ME coupled to a RUIM card CARD. In our example, the card CARD stores a list PRL. This example is not restrictive; the PRL list could be for example stored in the mobile phone ME.

System SYS also comprises a server SERV. In our example, this server is the home network operator. PRL lists are loaded into the SIM card from this server. Downloading can be performed for example by means of over the air (OTA) technics.

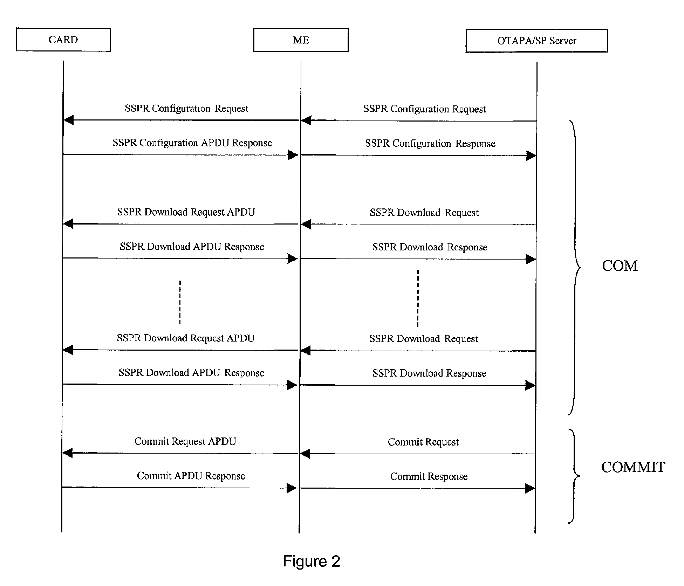

Figure 2 is an example of a communication between said couple Mobile-Card and the server SERV.

On this figure, we see a plurality of SSPR commands.

Reference COM means that PRL Update blocks are stored in EFmr file. This is updated as many times as required until the 'COMMIT' command.

This PRL comprises a list of preferred telecom operators. This list is stored in a file EFₚᵣₗ which can be updated. The structure of EFₚᵣₗ includes parameters blocks. In our example, parameters blocks are:
- A file ID block defines the file name. A file ID is used to address or identify each specific file. In our example this file ID includes two bytes.
- Access conditions block defining access rights on Read command, Update command, Invalidate command, Rehabilitate command. The Access conditions are set for administrator use only.
- a list block for defining the preferred operators

Such file Efprl includes other blocks, but for a better understanding of the invention, we have simplified in reducing the number of blocks and in using a vocabulary other than used in the above standards. For the correct vocabulary, and the correct structure, we will refer to the above-identified standards, which will define exactly the additional blocks.

In our example, we see that this file is inaccessible by the user of the card. The only person allowed to use this file is the administrator ADM. This way, the file Efmr can't be modified. Obviously, this way to manage access conditions is not restrictive; any other way to manage access might be used.

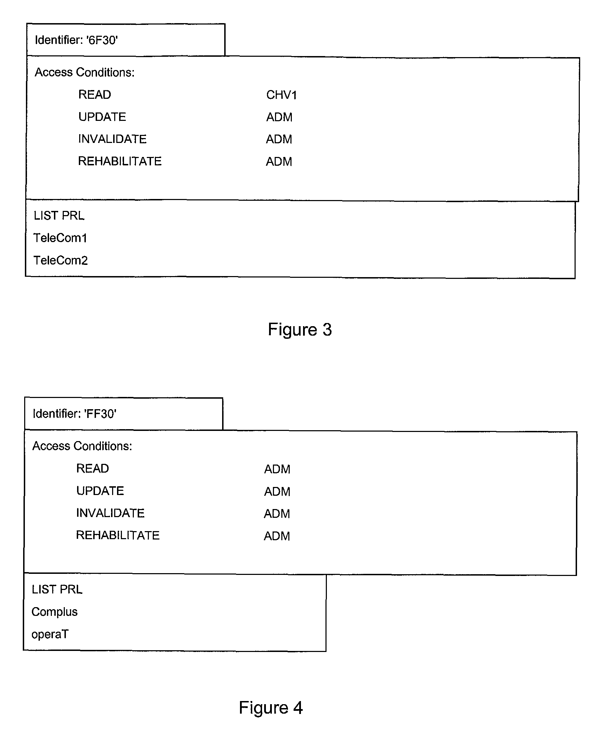

In our illustrated example, referring to Figure 3, the content of each parameter block is the following:
- the file name is 6F30
- the access conditions are the following:
   ■ Read command can be used with a password CHV1
   ■ And Update, Invalidate, Rehabilitate commands can be used by the administrator ADM.
- The preferred operators are "TeleCom 1 ", "TeleCom2".

In our example, we see that the user is allowed to use Read command and not the other commands. This example is not restrictive, any other access rights can be implemented function of the context.

Let's suppose the operator wants to update the file EFₚᵣₗ by a new one corresponding to the second file Efmr. The operator has a new list of operators "Complus" and "operaT" and wants to replace the current operators TeleCom 1", "TeleCom2" by "Complus" and "operaT".

According to the invention, the card also stores a second file Efmr. In our example, the operator downloads this file into the card CARD.

Preferably, the structure of this second file Efmr is the same as file EFₚᵣₗ. This file includes the same parameter blocks as the file EFₚᵣₗ but is located at a different place in memory and its content can be different from file EFₚᵣₗ.

Preferably, the first and second files are stored in the same permanent memory.

In our illustrated example, referring to figure 4, the content of each parameter block is the following:
- the file name is FF30
- the access conditions are the following:
   ■ Read, Update, Invalidate, Rehabilitate commands can be used by the administrator ADM;
- The preferred operators are: "Complus" and "operaT".

The following steps will help to understand how the file EFₚᵣₗ will be updated:
**Step 1**
   In a first step, referring to figure 2 and more particularly to reference COM, the operator sends a message (or a plurality of commands as shown on figure 2) including a new list of partners.
**Step 2**
   The mobile receives this message and stores the new list in said second file Efmr.
**Step 3**
   After reception and storage of the list of partners in Efmr, referring to figure 2, the operator server sends an update command. In our example, this command corresponds to the "commit" command.
**Step 4**
   When receiving this "commit" command, a program is therefore activated. The program renames the files as follows:
   - Rename the file Efmr by EFprl. EFmr becoming the new file defining the operators to be used by the mobile phone. So that, According to this embodiment, the second file EFmr becomes the current file EFprl by internally modifying the file header ID to EFprl.
   - And, in our example, Rename the file EFprl by Efmr. Old EFprl Becoming the new file dedicated for the updates. In this step, the file previously known as EFprl is for example renamed to a temporary File ID and used for storing future updates.

   In our example, the Access conditions are also swapped between the 2 files.
**Step 5**
   At this time, the new file EFₚᵣₗ is used as preferred operator list PRL for communicating with the network.
   Advantageously, this procedure will be encapsulated in a transaction, allowing backup of previous data in case of unsuccessful completion of update. For example, it is possible to create an inaccessible duplicate of the first file EFprl which will be used to store the blocks of PRL during the OTAPA/SP session.
   In our illustrated example, file identifiers (FF30, 6F30) are just suggested. However, the file ID can be of any value that does not affect normal functioning of the RUIM or Card.
   According to another embodiment, after step 5, data information stored in the second file Efmr is not deleted. The server could reuse this data information if updates are those stored in this file. In this embodiment, the operator would only have to send a command including a "commit" command without data information updates. This avoids the server to download a new time data information updates over the air.
   We could also imagine to store a plurality of temporary files EFmrₙ (n= 1, ..., k). Each file could be used in target regions where the operator has agreement with a respective partners list. In this embodiment, the operator would only have to send a command including a "commit" command and an indication of the file to be used among the plurality of files EFmrₙ (n= 1, ..., k). These files could be loaded during personalization step or later. This solution could permit the operator to download data information updates one time.
   We see now that with the invention, Storing large PRL doesn't affect performance for RUIM as the update just consists in renaming a file.

## Claims

1. Method for updating a file in a data processing system comprising a first file (Efprl) storing data information able to be updated through a network, **characterized in that** said system comprises at least one second file (Efmr) having the same structure as the first file (Efprl), said second file (EFmr) storing data information updates received from the network, and **in that** when the first file (Efprl) have to be updated, said method comprises the step of renaming the second file (Efmr) by the name of the first file (Efprl).

2. Method according to claim 1, **characterized in that** said program also performs, after the second file (Efmr) has been updated by the name of the first file (Efprl), a further step of renaming said first file (Efprl) by the name of the second file (Efmr).

3. Method according to claim 1 or 2, **characterized in that**, after the second file (Efmr) has been updated by the name of the first file (Efprl), a step of reusing this data information if updates are those stored in said file (Efmr).

4. Method according to claim 1, **characterized in that**, beforehand, each of said second file (Efmr) is prealably loaded in said system, and **in that** when the first file (Efprl) have to be updated by one of said second file (Efmr), the operator sends an update command including an indication of the file to be used among the plurality of files EFmrn (n= 1, ..., k) for updating said first file (Efprl).

5. Data processing system including a first file (Efprl) storing data information able to be updated through a network, **characterized in that** it stores a second file (Efmr) having the same structure as the first file (Efprl), said second file storing data information updates received from the network, and **in that** said system stores a program able to perform the step of renaming the second file (Efmr) by the name of the first file (Efprl) when the first file (Efprl) have to be updated by said second file (Efmr).

6. System according to claim 5, **characterized in that** said system is a mobile phone (ME) and **in that** said files (Efprl,EFmr) comprise a list of preferred operators to be used by the mobile.

7. Smartcard (CARD) including a first file (Efprl) storing data information able to be updated through a network, **characterized in that** it stores a second file (Efmr) having the same structure as the first file (Efprl), said second file storing data information updates received from the network, and **in that** said smart card (CARD) stores a program able to perform the step of renaming the second file (Efmr) by the name of the first file (Efprl) when the first file (Efprl) have to be updated by said second file (Efmr).

8. Computer program for a data processing system comprising a first file (Efprl) storing data information able to be updated through a network, **characterized in that** said system comprises a second file (Efmr) having the same structure as the first file (Efprl), said second file storing data information updates received from the network, said program including instruction code for, when the first file (Efprl) have to be updated by said second file (Efmr), renaming the second file (Efmr) by the name of the first file (Efprl)
